Europäisches Patentamt

(19) **European Patent Office**

**Office européen des brevets**

(11) Publication number: **0 098 693**
**A1**

# EUROPEAN PATENT APPLICATION

(21) Application number: **83303357.4**

(51) Int. Cl.³: **B 65 G 11/08**

(22) Date of filing: **10.06.83**

(30) Priority: **12.06.82 GB 8217123**

(71) Applicant: **TISSMETAL LIONEL-DUPONT, 138 boulevard de la Croix-Rousse, F-69001 Lyon (FR)**

(43) Date of publication of application: **18.01.84 Bulletin 84/3**

(72) Inventor: **Leclancher, Guy Charles, 38 rue de Regard, F-94360 Bry sur Marne (FR)**

(84) Designated Contracting States: **AT BE CH DE FR GB IT LI LU NL SE**

(74) Representative: **Lewis, Samuel Hewitt et al, FORRESTER & BOEHMERT Widenmayerstrasse 4/I, D-8000 München 22 (DE)**

(54) A ramp.

(57) A downwardly inclined pathway for supporting and conveying objects, such as a glacis, comprises two or more pathway elements (11, 12, 13, 14) arranged in longitudinal succession and which present respective sections of the pathways supporting surface, the slope of at least one of the pathway elements being adjustable by adjustment means (26, 27) relative to a supporting structure (15). The slope of the pathway may thereby be altered to accommodate different conditions and different objects to assist in the objects travelling from an upper end to the lower end without stopping on the pathway and also without arriving at the lower end at too great a speed.

Title: "A Ramp"

The present invention relates to an object conveying ramp providing a downwardly inclined pathway for supporting and conveying objects which, in use, move gravitationally from an upper end at which the objects are fed to the pathway to a lower end. Such ramps are hereinafter referred to as being of the kind specified.

The pathway may be bounded laterally by means to retain the objects against lateral displacement from the pathway.

The invention is primarily, but not exclusively, concerned with a ramp of the kind specified known as a glacis. A glacis is a ramp providing a pathway for conveying objects, having a pathway width of sufficient magnitude to allow several persons to stand side-by-side adjacent the lower end of the pathway to receive and distribute or otherwise handle objects arriving at the lower end thereof, the objects having been delivered to different positions across the width of the pathway at the upper end thereof.

The angle at which the pathway in ramps of the kind specified is inclined to the horizontal is ideally so selected that the objects will travel down the pathway at a speed which is within satisfactory upper- and lower limits.

Unfortunately, there are problemns with selecting a correct angle of inclination. If the pathway is not sufficiently steep, friction between the pathway and the objects may be such that they stop before arriving at the lower end of the pathway, and if it is too steep, the objects may be damaged through collision with one another or with an end stop which may be provided on the ramp at the lower end of the pathway, or they may even cause harm to personnel receiving and distributing the objects.

Objects moving down the pathway from time to time or concurrently may differ in size and weight, and the nature of such objects may differ so that they present different coeficients of friction with respect to the pathway. Further, the pathway of the ramp may be affected by environmental conditions of temperature and humidity and by the frequency of use or periods of idleness, all of which may cause some objects to pass successfully and at a suitable speed down the pathway, while others may travel too fast and others stop altogether before they reach the lower end.

For example, if the ramp is subject to a cool ambient temperature overnight, then, when it is first used in the morning, when the ambient temperature is likely to have risen above the temperature of the ramp itself, the surface of the pathway can be affected by condensation causing the objects to be retarded.

If the angle of inclination of the pathway were selected to ensure that objects will travel down the ramp in such conditions, then when conditions were more favourable, e.g. the surface of the pathway had become dry, and, due to frequent use, polished, then the objects would be prone to pass down the pathway at speeds sufficiently high to give rise to risk of, or cause damage to the objects themselves or to the persons receiving and distributing the objects at the lower end of the pathway.

It is an object of the present invention to provide a ramp which overcomes or reduces the above mentioned problems.

According to one aspect of the present invention, we provide an object conveying ramp providing a downwardly inclined pathway for supporting and conveying objects which, in use, move gravitationally from an upper end at which the objects are fed to the pathway to a lower end, characterised in that said ramp comprises two or more pathway elements in longitudinal succession and which present respective sections of the pathway supporting surface and in that the slope of at least one of said elements is adjustable.

Preferably, the slope of each pathway element is adjustable.

Means may be provided to adjust the slope of the adjustable pathway elements and conveniently said adjustment means enables the height of either the upper or lower ends of each ramp element relative to a supporting structure to be adjusted.

With the exception of both the pathway elements which present the upper and lower ends of the ramp, preferably both the upper and lower end of the pathway elements are adjustable relative to the supporting structure.

Preferably, said ramp comprises a plurality of pathway elements arranged in "cascade" wherein a vertical space exists between the lower end of an upper ramp element and the upper end of an adjacent lower ramp element.

Said ramp may comprise a glacis and may include conveying means for conveying objects and delivering said objects to the upper end of the glacis. An accumulation area may be provided at the lower end of the glacis for the temporary accumulation of objects to be sorted and distributed.

Preferably said conveying means may comprise a plurality of gates or other selective distribution means whereby objects may be delivered to different positions along the upper end of the glacis to distribute articles selectively along the entire width thereof.

Where the ramp comprises a glacis, in order to facilitate adjustment to alter the slope of the pathway elements, each adjustable pathway element may comprise a plurality of width parts each having a width affording a portion of the total width of the glacis. Such an arrangement enables the slope of the glacis not only to be different between upper and lower pathway elements, but also different width parts of the glacis may have slopes different from each other. Thus if it is known that some objects to be sorted are of a particular size or weight, and are likely to travel at a relatively high speed, they may be delivered to a width part of the glacis having a relatively small slope while lighter objects which are known to travel at less speed and are prone to stick on the glacis before they reach the lower end thereof, may be delivered to a width part of the glacis provided with a relatively steep slope.

The means for providing adjustment of each pathway element or each width part thereof may comprise any suitable arrangement and may comprise adjustment members secured to one or both ends of each element, said adjustment members being adapted to co-operate with a supporting structure in a plurality of different relative positions so as to provide a plurality of different fixed positions of the pathway element relative to the supporting structure and hence a plurality of different slopes.

Mechanical, hydraulic or electrical means may be provided to automatically adjust the relative positions between the pathway element and a supporting structure so as to alter the slope of the different pathway elements, adjustment of said means being controlled by either manually operable control means, or alternatively an automatic control means may be provided which determines the slope of each pathway element in accordance with the type of object about to use the ramp.

The arrangement of the ramp of the present invention enables simple adjustment of the slope of each pathway element and hence the characteristics of the slope of the ramp as a whole to ensure satisfactory operation of a considerable range of objects and conditions. When conditions, whether because of the nature of the objects or other prevailing conditions, such as climatic conditions which may lead to condensation on the ramp make

0098693

- 4 -

a change in the slope of the ramp desirable, such change may be made without difficulty and, since the ramp is preferably formed from more than two pathway elements, the weight of each element and hence the force required to make the adjustment, is relatively small compared with the weight of the ramp as a whole.

The invention will now be described in more detail by way of example only with reference to the accompanying drawings which illustrates the type of ramp known as a glacis.

FIGURE 1 is a sectional view of a glacis of the present invention;

FIGURE 2 is a plan view of the glacis shown in section in Figure 1;

FIGURE 3 is a fragmentary view of the pathway elements of the glacis shown in Figures 1 and 2 illustrating one form of adjustment means.

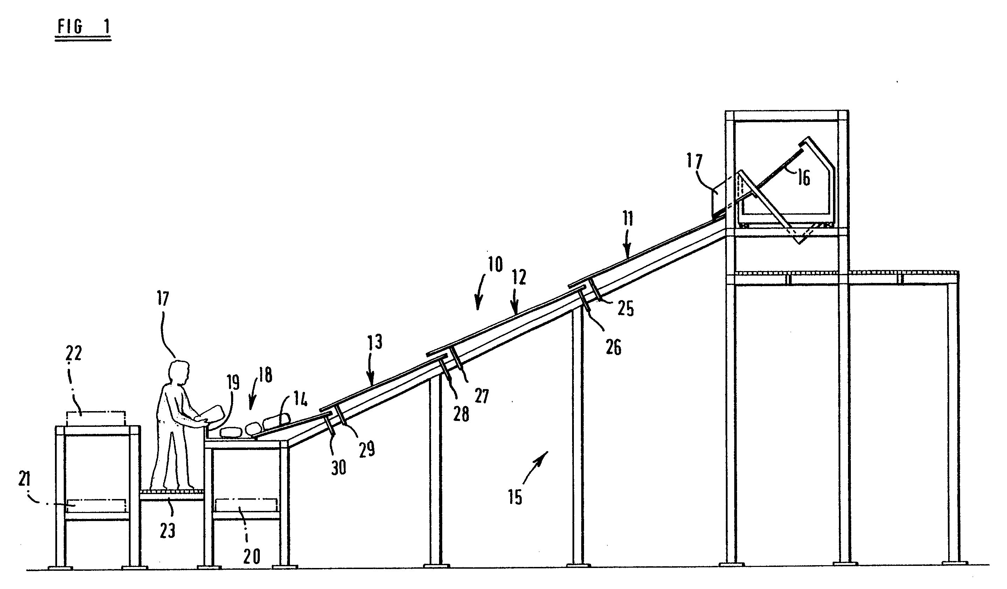

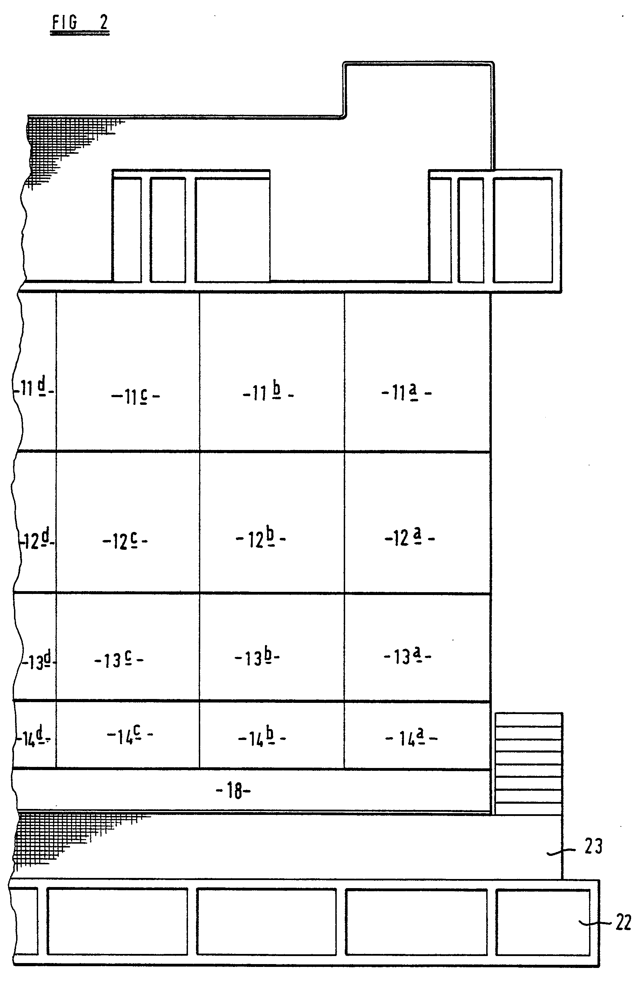

Referring first to Figures 1 and 2, a glacis comprises a ramp generally indicated at 10 which in turn comprises pathway elements 11, 12, 13 and 14.

The pathway elements are supported by a supporting framework generally indicated at 15.

A conveyor 16 is provided at the upper end of the glacis and is adapted to carry articles which are then delivered to various positions along the upper end of the glacis through doors, one of which is shown at 17, situated at different positions along the upper edge.

Articles are sorted at the lower end of the glacis by operatives, one of which is shown at 17, who, in the arrangement shown, takes the articles from the accumulation area 18 which is provided with a stop member 19 and places each object on one of three conveyors 20, 21 or 22.

The operatives 17 have a walkway 23 which enables easy access to the accumulation area 18 in addition to providing access to the three conveyors 20, 21 and 22.

Each of the pathway elements 11, 12 and 13 are provided with adjustment means whereby their inclination to the horizontal may be adjusted independently of adjacent pathway elements. The pathway element 11 is provided with a lower strut 25. The pathway element 12 has an upper strut 26 and a lower strut 27. The pathway element 13 has an upper strut 28 and a lower strut 29 and the pathway element 14 has an upper strut 30.

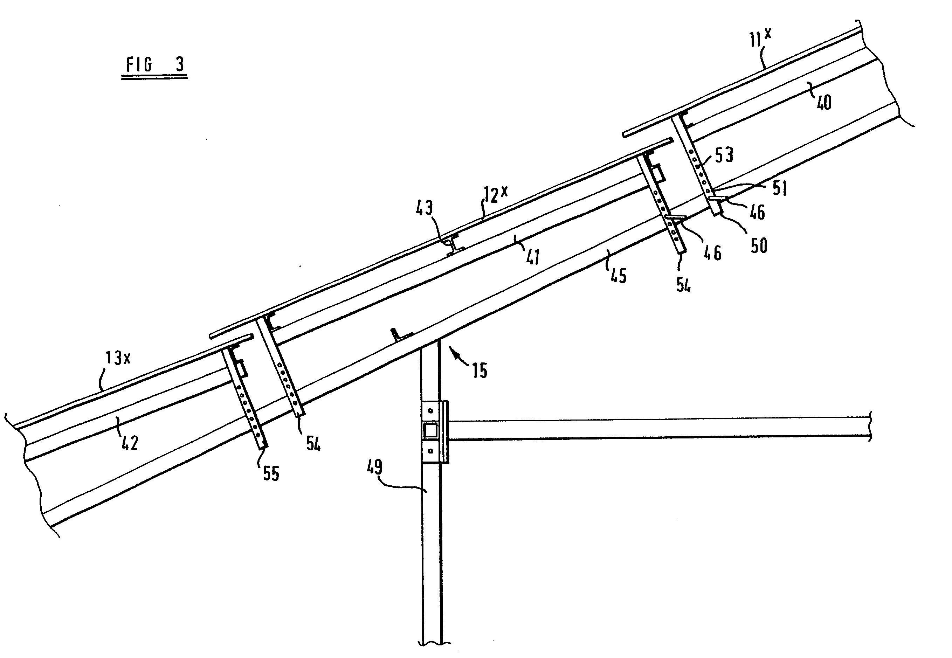

The struts 25 to 30 co-operate with a supporting structure in a plurality of relatively different positions in a manner which will be described in more detail with reference to Figure 3.

The width of the glacis can be considerable in order that many operatives, such as the one shown at 17, can work simultaneously. It has been found advisable therefore that each of the pathway elements 11, 12, 13 and 14 are sub-divided into parts extending across the width of the glacis. Thus the pathway element 11 is sub-divided into width parts 11a, 11b, 11c etc. In practice there may be a considerable number of such width parts. Similarly the pathway element 12 is sub-divided into width parts 12a, 12b, 12c, 12d etc.

Each width part, i.e. 11a, of each pathway element is provided with separate adjusting means such as the strut 25, in order to effect adjustment of that individual section.

It is envisaged that all the width parts of a pathway element, i.e. 11a, 11b, 11c, 11d etc. while capable of being movable relative to the supporting structure independently of each other, may be provided with means whereby all width parts of a pathway element may be moved together.

A significant advantage is obtained in enabling the individual adjustment of each width part of a pathway element since the force required is small enabling simple manual adjustment. Furthermore, since each width part may be adjusted independently of an adjacent width part, the glacis may have different slope configurations at different positions across its width.

The adjustment means will now be described in more detail with reference to Figure 3.

Typical pathway element width parts 11x, 12x, 13x may be made from any suitable material such as metal or wood and typically they are made from wood, are secured to a supporting framework comprising elongate members 40, 41 and 42 respectively. The width part 12x has an additional transverse stiffening member 43.

The width part 11x has secured thereto a strut 50 which strut 50 is also secured to the elongate member 40 and has a plurality of holes such as the hole 51 in order to secure the lower end of the width part 11x to the supporting framework generally indicated at 15 and compr ising inter alia upright member 44 and inclined member 45, a peg 46 is passed through one of the holes predetermined by the slope required, for example the hole 51, and through a corresponding hole in the inclined member 45.

If it is found that the slope is insufficient then the peg 46 may be withdrawn, the lower end of the width part 11x lowered until one of the other holes, for example the hole 53, is aligned with the hole in the inclined member 45 and the pegs passed through the holes when aligned.

The width part 12x is provided with a pair of struts 54 and 55, each strut being provided with a plurality of holes and adjustment of this width part of the pathway element at either or both ends is carried out in a manner as afore described for the adjustment of the lower end of width part 11x. The next width part 13x is provided with a pair of struts only one of which is shown in Figure 3 at 55. Once again adjustment of this section of the ramp element will be as afore described.

It will be appreciated that the adjustment means as afore described enables the various pathway elements 11, 12, 13, 14 of the glacis to be adjusted as desired in order to maintain efficient operation of the glacis as a whole.

In practice, each width part will probably be provided with a pair of adjustment struts at each end.

The adjustment may only be provided by separating the ramp into different pathway elements since the upper end of the pathway element 11 for example must co-operate with the conveyor 16 and thus it is preferable that the upper end of element 11 remains at a constant height or at least any adjustment must be limited in order to successfully co-operate with the conveyor 16. Similarly the lower end of pathway element 14, i.e. that communicating with the sorting area 18, should remain at a constant height otherwise an operative such as that shown at 17 may not be able to work in a convenient position.

The adjustment means described with reference to the accompanying drawing is of a particularly simple and economical form. It is envisaged, however, that where, for reasons of operating conditions and/or differences in the objects to be sorted, constant or frequent adjustment of the angle of inclination of the pathway elements of the glacis is desirable then automatic adjustment means may be provided, for example hydraulic rams or adjustable cam elements, which may be motorised, and a suitable control panel provided for manual operation by, for example, sorting operatives or a supervisor to ensure efficient operation at all times.

The pathway elements 11 to 14 have been shown arranged in cascade. However, it is envisaged that the lower end of one element may abut and be, for example, pivotally connected to the upper edge of an adjacent element, for example the lower end of pathway element 11 may be pivotally connected to the upper end of pathway element 12. It will be appreciated, however, that where the pathway elements are pivoted together, any adjustment of the pathway element 11 necessarily affects adjustment of the upper end of pathway element 12 whereas the cascade arrangement of the glacis as illustrated permits an additional advantage of independent adjustment of adjacent edges of different pathway elements.

Whereas the invention has been specifically described with reference to a glacis as shown in the drawings, it is equally applicable to any ramp of the kind specified.

CLAIMS:

1.    An object conveying ramp providing a downwardly inclined pathway for supporting and conveying objects which, in use, move gravitationally from an upper end at which the objects are fed to the pathway to a lower end, characterised in that said ramp comprises two or more pathway elements (11,12,13,14) in longitudinal succession and which present respective sections of the pathway supporting surface and in that the slope of at least one of said elements is adjustable.

2.    A ramp as claimed in Claim 1 characterised in that the slope of each pathway element (11,12,13,14) is adjustable.

3.    A ramp as claimed in Claim 1 or Claim 2 characterised in that means (25,26,27,28,29,30) are provided to adjust the slope of the or each adjustable pathway elements.

4.    A ramp as claimed in Claim 3 characterised in that said adjustment means enables the height of either the upper or lower ends of each ramp element (11,12,13,14) relative to a supporting structure (15) to be adjusted.

5.    A ramp as claimed in any one of the preceding claims characterised in that with the exception of both the pathway elements (11, 14) which present respectively the upper and lower ends of the ramp, both the upper and lower end of the pathway elements ((10, 13) are adjustable relative to the supporting structure (15).

6.    A ramp as claimed in any one of the preceding claims characterised in that the pathway elements (11,12,13,14) are arranged in cascade wherein a vertical space exists between the lower end of an upper ramp element and the upper end of an adjacent lower ramp element.

7.    A ramp as claimed in any one of the preceding claims characterised in that the ramp comprises a glacis and in that conveying means are provided for conveying objects and delivering said objects to the upper end of said glacis.

8. A ramp as claimed in any one of the preceding claims characterised in that an accumulation area (18) is provided at the lower end thereof for the temporary accumulation of objects supported and conveyed by said downwardly inclined pathway.

9. A ramp as claimed in any one of the preceding claims characterised in that the ramp comprises a glacis and in that each adjustable pathway element (12) comprises a plurality of width parts (12a,12b,12c,12d) each having a width affording a portion of the total width of the glacis and in that at least some of the width parts are adjustable independently from other width parts.

10. A ramp as claimed in any one of the preceding claims characterised in that said means (26,27) for providing adjustment of each pathway element (12) or each width part (12a,12b,12c,12d) comprises adjustment members (54) adapted to co-operate with a supporting structure (15) in a plurality of different relative positions so as to provide a plurality of different fixed positions of the pathway element (12) or width parts thereof relative to the supporting structure (15) to provide a plurality of different slopes.

FIG 1

0098693

FIG 2

| -11 d- | -11 c- | -11 b- | -11 a- |
| -12 d- | -12 c- | -12 b- | -12 a- |
| -13 d- | -13 c- | -13 b- | -13 a- |
| -14 d- | -14 c- | -14 b- | -14 a- |

-18-

23

22

FIG 3

**European Patent Office**

**EUROPEAN SEARCH REPORT**

Application number

| | DOCUMENTS CONSIDERED TO BE RELEVANT | | EP 83303357.4 |
|---|---|---|---|

| Category | Citation of document with indication, where appropriate, of relevant passages | Relevant to claim | CLASSIFICATION OF THE APPLICATION (Int. Cl. 3) |
|---|---|---|---|
| Y | US - A - 1 208 964 (HODGES) <br> * Fig. 1 * <br> -- | 1 | B 65 G 11/08 |
| Y | GB - A - 739 320 (KEIR & CAWDER) <br> * Fig. 3 * <br> -- | 1 | |
| X | US - A - 2 472 308 (O'HALLORAN) <br> * Fig. 1 * <br> -- | 1 | |
| A | DE - C - 630 739 (VEDDER) <br> * Fig. 1,3 * <br> -- | 2,3 | |
| A | US - A - 1 703 820 (HOSLER) <br> ---- | 1-3 | TECHNICAL FIELDS SEARCHED (Int. Cl. 3) <br><br> B 65 G |

The present search report has been drawn up for all claims

| Place of search | Date of completion of the search | Examiner |
|---|---|---|
| VIENNA | 24-10-1983 | PISSENBERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82